# EUROPEAN PATENT APPLICATION

(11) **EP 0 831 396 A2**
(43) Date of publication of application: **25.03.1998**
(21) Application number: 97116366.2
(22) Date of filing: 19.09.1997
(51) Int. Cl.: G06F 7/50

(54) **Sticky bit determination in floating point arithmetic system**

(30) Priority: 19.09.1996 JP 247578/96
(71) Applicant: NEC CORPORATION, Tokyo (JP)
(72) Inventor: Kawaguchi, Tadaharu, Kofu-shi, Yamanashi (JP)
(74) Representative: VOSSIUS & PARTNER

(57) **Abstract**

A system determines a sticky bit in a floating point arithmetic system without performing a logical sum of bits shifted out after alignment. The system compares exponents of input operands representing floating-point numbers, and subtracts smaller exponent from larger exponent to determine a shift amount by which the smaller mantissa is to be shifted for alignment. The system generates a shift signal indicative of the determined shift amount. The system counts the number of leading zero in mantissa of the smaller exponent toward the most significant bit of the mantissa, and generates a leading zero count signal indicative of the counted number of leading zero. The system compares the shift signal with the leading zero count signal and generates a sticky bit signal in response to the result of comparing the shift signal with the leading zero count signal, which sticky bit signal anticipates creation of a sticky bit after shifting the mantissa for alignment.

## Description

The present invention relates to floating point arithmetic systems and more particularly to sticky bit determination in floating point arithmetic systems.

As is known in the art, many applications in computers require the use of numbers that are not integers. There are several ways in which non-integers can be represented in computers. The most common approach is the so-called floating-point number in which a number is divided into separate sections or registers. One section is a fraction (mantissa) that represents the precision of the number, and the other section of the register is an exponent that represents in base two, the power to which the fraction is raised. A third section has a sign bit for the operand or number.

According to JP-A 3-171228, high speed floating point arithmetic is accomplished by anticipating rounding and performing the rounding operation during addition or subtraction of mantissas.

Addition (or subtraction) of floating-point numbers requires the computer to compare exponents, shift mantissa of smaller term so that both terms have equal exponents, add (or subtract) mantissas, and normalize result. To align mantissa of smaller exponent, the mantissa is shifted to the right. A sticky bit represents a logical sum of all bits that have been shifted off to the right.

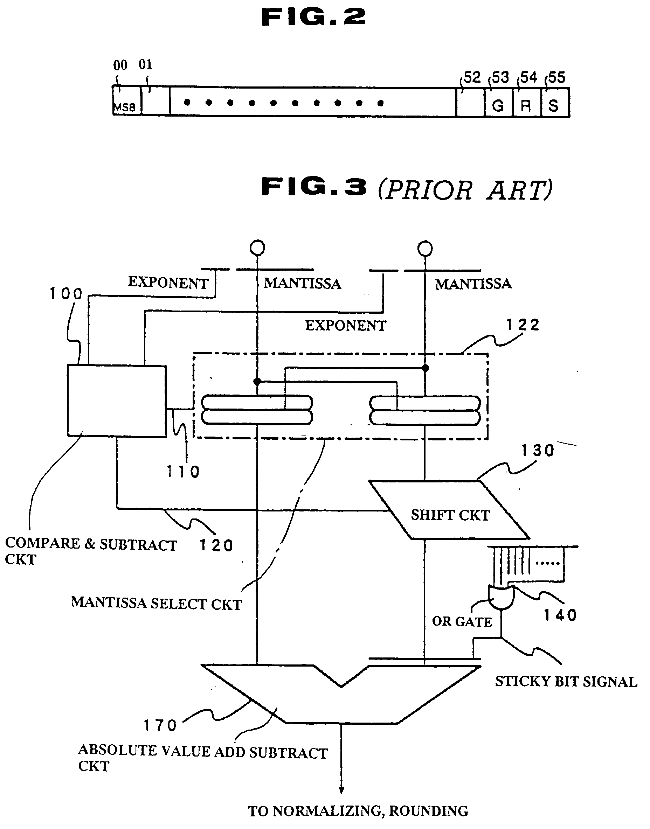

Referring to Fig. 3, a conventional system for determining sticky bit is described. At a comparing and subtracting circuit 100, exponents of first and second input operands are compared, and the exponent of smaller exponent is subtracted from the exponent of the larger exponent. The circuit 100 generates a comparison-result signal 110 indicative of which one of the two input operand exponents is larger and a shift signal 120 indicative of the result of the subtraction. It provides the comparison-result signal 110 to a mantissa selecting circuit 122 and the shift amount signal 120 to a shifting circuit 130. As dictated by the input comparison-result signal 110, the mantissa selecting circuit 122 provides the mantissa of the larger exponent to an absolute value adding and subtracting circuit 170, and the mantissa of the smaller exponent to the shifting circuit 130. As dictated by the input shift signal 120, the shifting circuit 130 aligns the mantissa of the smaller exponent by shifting to the right. The shifting circuit 130 outputs the aligned mantissa to the absolute value adding and subtracting circuit 170, and all bits that have been shifted off are provided to inputs of a logical OR gate 140. The OR gate 140 performs a logical sum of all of the input bits to determine a sticky bit and provides the determined sticky bit to the absolute value adding and subtracting circuit 170.

The absolute value adding and subtracting circuit 170 performs addition or subtraction of the mantissa of the larger exponent, the aligned mantissa and the sticky bit. Let us now consider the case where the first operand exponent is larger than the second operand exponent. In this case, the comparing and subtracting circuit 100 compares the input operand exponents each other, and subtracts the second operand exponent from the first operand exponent. The circuit 100 generates and provides a comparison-result signal 110 indicative of that the first operand exponent is larger to the mantissa selecting circuit 122, and a shift signal 120 indicative of the result of subtraction to the shifting circuit 130. In response to the comparison-result signal 110, the mantissa selecting circuit 122 provides the second operand mantissa to the shifting circuit 130 and the first operand mantissa to the absolute value adding and subtracting circuit 170. The shifting circuit 130 shifts the second operand mantissa to the right by an amount dictated by the shift signal 120. All the bits shifted off to the right are provided to OR gate 140. OR gate 140 conducts a logical sum of all of the input bits and generates a sticky bit signal indicative of the result of the logical sum. This sticky bit signal is provided to the absolute value adding and subtracting circuit 170. The absolute value adding and subtracting circuit 170 adds the first operand mantissa, the second operand mantissa as aligned, and the sticky bit. The result of addition at this circuit 170 is normalized and rounded to give a final result.

The sticky bit determination of the above kind requires three-stage operations, namely, comparison and subtraction of operand exponents, shift of mantissa, and logical sum of bits shifted off. Alternatively, it requires four-stage operations, namely, comparison and subtraction of operand exponents, mantissa selection, shift of mantissa, and logical sum of bits shifted off. Thus, it takes a considerable time before initiating adding at the absolute value adding and subtracting circuit.

An object of the present invention is to provide a system for determining a sticky bit, which is faster than the conventional system.

According to the present invention, the number of leading zero is counted and compared with an amount to be shifted simultaneously with a shifting operation for alignment, thereby to determine a sticky bit prior to completion of the shifting operation.

According to one aspect of the present invention, there is provided a system for determining a sticky bit in a floating point arithmetic system, comprising:
a comparing and subtracting unit operative to compare exponents of input operands representing floating-point numbers and to subtract from exponent of one of said input operands exponent of other of said input operands to determine a shift amount by which mantissa of said other input operand is to be shifted until said one and other input operands have equal exponents, said comparing and subtracting unit being operative to generate a shift signal indicative of said determined shift amount;
a leading zero counter operative to count the number of leading zero in mantissa of said other input operand toward the most significant bit of the mantissa, said leading zero counter being operative to generate a leading zero count signal indicative of the counted number of leading zero; and
a comparator operative to compare said shift signal with said leading zero count signal, said comparator being operative to generate a sticky bit signal in response to the result of comparing said shift signal with said leading zero count signal, which sticky bit signal anticipates creation of a sticky bit after shifting the mantissa for alignment.

According to another aspect of the present invention there is provided a method of determining a sticky bit in a floating point arithmetic system, comprising the steps of:
comparing exponents of input operands representing floating-point numbers;
subtracting from exponent of one of said input operands exponent of other of said input operands to determine a shift amount by which mantissa of said other input operand is to be shifted until said one and other input operands have equal exponents and generating a shift signal indicative of said determined shift amount;
counting the number of leading zero in mantissa of said other input operand toward the most significant bit of the mantissa and generating a leading zero count signal indicative of the number of leading zero; and
comparing said shift signal with said leading zero count signal and generating a sticky bit signal in response to the result of comparing said shift signal with said leading zero count signal, which sticky bit signal anticipates creation of a sticky bit after shifting the mantissa for alignment.

Fig. 1 is a block diagram of a system for determining a sticky bit in a floating point arithmetic system;
Fig. 2 is a diagram illustrating the format of a register for a mantissa; and
Fig. 3 is a block diagram of a conventional system for determining a sticky bit in a floating point arithmetic system.

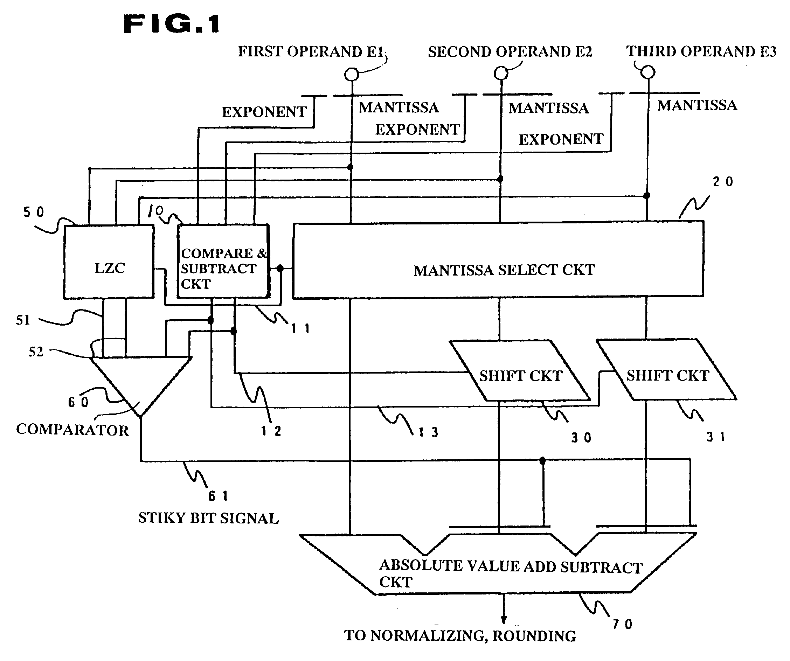

Referring to Fig. 1, there is shown a preferred embodiment of a sticky bit determining system according to the present invention with an alignment performing portion of a floating point arithmetic system. This floating point arithmetic system uses one of various approaches set forth in the article "A proposed Standard for Binary Floating Point Arithmetic", IEEE Task P754 Computer Page 51, March 1981. The sticky bit determining system determines a sticky bit to be placed at a sticky bit position shown in Fig. 2. The sticky bit represents a logical sum of all bits that have been shifted off to the right during alignment of mantissa.

In Fig. 1, a comparing and subtracting circuit 10 compares three input operands, namely a first, a second and a third operand E1, E2 and E3, to determine one operand with the largest exponent, and subtracts each of exponents of the other two operands from the largest exponent. The circuit 10 generates a comparison-result signal 11 indicative of which one of the input operands has the largest exponent, and first and second shift signals 12 and 13 indicative of results of the subtraction operations, respectively. The comparison-result signal 11 is provided to a mantissa selecting circuit 20, and the first and second shift signals 12 and 13 are provided to first and second shifting circuits 30 and 31, respectively.

In response to the comparison-result signal 11, the mantissa selecting circuit 20 provides a mantissa of the operand with the largest exponent to an absolute value adding and subtracting circuit 70 and provides mantissas of the other two operands to the first and second shifting circuits 30 and 31, respectively. In response to the first shift signal 12, the first shifting circuit 30 shifts the mantissa of the corresponding one operand off to the right. In response to the second shift signal 13, the second shifting circuit 31 shifts the mantissa of the corresponding one operand off to the right.

The comparison-result signal 11 is provided also to a leading zero counter (LZC) 50. Also provided to the LZC 50 are mantissas of the input operands E1, E2 and E3. The LZC 50 counts the number of leading zero toward the most significant bit (MSB) position of the mantissa of each of the two input operands other than the operand with the largest exponent. The LZC 50 generates and provides first and second leading zero count signals 51 and 52 that are indicative of the numbers of leading zero of the corresponding mantissas to a comparator 60. The mantissas that have been acted upon by the LZC 50 are those of the input operands. They are not yet extended to place a guard bit G and a round bit R. Thus, each of the mantissas has placed 0 (zero) at a guard bit position and a round bit position.

The comparator 60 compares the first leading zero count signal 51 with the first shift signal 12. The first leading zero count signal 51 is indicative of the number of leading zero of the mantissa that is provided by the mantissa selecting circuit 20 to the first shifting circuit 30. The comparator 60 compares the second leading zero count signal 52 with the second shift signal 13. The second leading zero count signal 52 is indicative of the number of leading zero of the mantissa that is provided by the mantissa selecting circuit 20 to the second shifting circuit 31. The comparator 60 generates a sticky bit signal 61 that includes two bit positions indicative of the two comparison results, respectively. The comparator 60 places 0 (zero) at one of two bit positions of the signal 61 when the first shift signal 12 is not greater than the first leading zero count signal 51. The comparator 60 places 1 (one) at the one bit position when the first shift signal 12 is greater than the first leading zero count signal 51. When the second shift signal 13 is not greater than the second leading zero count signal 52, the comparator 60 places 0 (zero) at the other bit position of the sticky bit signal 61. When the second shift signal 13 is greater than the second leading zero count signal 52, the comparator 60 places 1 (one) at the other bit position of the sticky bit signal 61. The contents placed at the two bit positions of the sticky bit signal 61 are used as sticky bits S that are provided to the absolute value adding and subtracting circuit 70.

Referring to Fig. 2, the sticky bit represents a logical sum of all the bits that have been shifted to the right out of the round bit position for alignment of mantissa. If, for example, the first shift signal 12 is greater than the first leading zero count signal 51, it is anticipated that at least one of all of the bits that have been shifted out of the round bit position is 1 (one). Thus, comparing the amount of shift to the right with the number of leading zero can determine the sticky bit.

In the format shown in Fig. 2, a hidden bit occupies the most significant bit (MSB) position 00, and the mantissa occupies bit positions 01 to 52. The guard bit G occupies a guard bit position 53 that is next to and less significant than the least significant bit position 52 of the bit positions that are occupied by the mantissa. The round bit R occupies a round bit position 54 that is next to and less significant than the guard bit position 53. The sticky bit S occupies a bit position 55 that is next to and less significant than the round bit position 54.

Referring to Figs. 1 and 2, operation of the preferred embodiment is described. Mantissas of three input operands E1, E2 and E3 are provided to the mantissa selecting circuit 20 and the LZC 50, while exponents thereof are provided to the comparing and subtracting circuit 10. If, for example, the first operand E1 has the largest exponent, the circuit 10 compares the three exponents each other to generate "100" as a comparison result signal 11. The circuit 10 subtracts the exponent of the second operand E2 from the exponent of the first operand E1 to generate a first shift signal 12 indicative of the result of this subtraction. The circuit 10 subtracts the exponent of the third operand E3 from the exponent of the first operand E1 to generate a second shift signal 13 indicative of the result of this subtraction. These two first and second shift signals 12 and 13 are provided to the first and second shifting circuits 30 and 31, respectively.

As dictated by the content "100" of the comparison result signal 11, the selecting circuit 20 provides the mantissas of the second and third operands E2 and E3 to the first and second shifting circuits 30 and 31, respectively. Besides, the selecting circuit 20 provides the mantissa of the first operand E1 to the absolute value adding and subtracting circuit 70. As dictated the content "100" of the comparison result signal 11, the LZC 50 counts the number of leading zero of each of the mantissas of the second and third operands E2 and E3. The LZC 50 generates a first leading zero count signal 51 indicative of the number of leading zero of the mantissa of the second operand E2 and a second leading zero count signal 52 indicative of the number of leading zero of the mantissa of the third operand E3. These signals 51 and 52 are provided to the comparator 60. The comparator 60 compares the first leading zero count signal 51 with the first shift signal 12 and the second leading zero count signal 52 with the second shift signal 13. The results of these comparisons are provided as two-bit sticky bit signal 61 to the absolute value adding and subtracting circuit 70.

Let us consider the case where each of bit positions of a mantissa is occupied by 1. In this case, the number of leading zero of the mantissa which is indicated by a leading zero count signal is 2. If, for example, the amount of shift to the right for alignment of the mantissa is greater than 2, it is anticipated that at least one of bits shifted out of the guard bit position is 1. Thus, a sticky bit is 1. If the amount of shift to the right is not greater than 2, there are no bits shifted to the right out of the guard bit position. Thus, the sticky bit is 0.

The first shifting circuit 30 aligns the mantissa of the second operand E2 by shifting to the right by an amount as dictated by the first shift signal 12. The aligned mantissa is extended to place the guard bit G, round bit R, and sticky bit S, which is determined by the comparator 60, and the result is provided to the absolute value adding and subtracting circuit 70. Likewise, the second shifting circuit 31 aligns the mantissa of the third operand E3 by shifting to the right by an amount as dictated by the second shift signal 13. The aligned mantissa is extended to place the guard bit G, round bit R, and sticky bit S, which has been determined by the comparator 60, and the result is provided to the absolute value adding and subtracting circuit 70.

The absolute value adding and subtracting circuit 70 adds or subtracts the mantissa of the first operand E1 and the mantissas that have been aligned and provided by the first and second shifting circuits 30 and 31. Subsequently, the result from addition or subtraction by the circuit 70 is normalized and rounded before giving a final result.

According to the embodiment, a sticky bit is determined simultaneously with shifting operation of a mantissa for alignment. Thus, the sticky bit is given before or upon completion of the shifting operation. It is now appreciated that the sticky bit determination described above is faster than the conventional system.

## Claims

1. A system for determining a sticky bit in a floating point arithmetic system, comprising:
a comparing and subtracting unit operative to compare exponents of input operands representing floating-point numbers and to subtract from exponent of one of said input operands exponent of other of said input operands to determine a shift amount by which mantissa of said other input operand is to be shifted until said one and other input operands have equal exponents, said comparing and subtracting unit being operative to generate a shift signal indicative of said determined shift amount;
a leading zero counter operative to count the number of leading zero in mantissa of said other input operand toward the most significant bit of the mantissa, said leading zero counter being operative to generate a leading zero count signal indicative of the counted number of leading zero; and
a comparator operative to compare said shift signal with said leading zero count signal, said comparator being operative to generate a sticky bit signal in response to the result of comparing said shift signal with said leading zero count signal, which sticky bit signal anticipates creation of a sticky bit after shifting the mantissa for alignment.

2. A floating-point arithmetic system with a sticky bit determination, comprising:
a comparing and subtracting unit operative to compare exponents of input operands representing floating-point numbers to determine one of said input operands having the largest exponent, said comparing and subtracting unit being operative to generate a comparison result signal indicative of the comparison result,
said comparing and subtracting unit being operative to subtract from the largest exponent of said one input operand exponent of other of said input operands to determine a shift amount by which mantissa of said other input operand is to be shifted until said one and other input operands have equal exponents, said comparing and subtracting unit being operative to generate a shift signal indicative of said determined shift amount;
a leading zero counter operative to count the number of leading zero in mantissa of said other input operand toward the most significant bit of the mantissa, said leading zero counter being operative to generate a leading zero count signal indicative of the counted number of leading zero;
a comparator operative to compare said shift signal with said leading zero count signal, said comparator being operative to generate a sticky bit signal in response to the result of comparing said shift signal with said leading zero count signal, which sticky bit signal anticipates creation of a sticky bit after shifting the mantissa for alignment;
a mantissa selecting unit operative to select and provide mantissas of said input operands in response to said comparison result signal;
a shifting unit operative in response to said shift signal to shift mantissa of said other input operand that is provided thereto by said mantissa selecting unit so that said mantissas have equal exponents, said shifting unit being operative to generate an output signal indicative of said shifted mantissa; and
an absolute value adding and subtracting unit operative to perform addition or subtraction in response to said output signal and said sticky bit signal.

3. A circuitry system for determining a sticky bit in a floating point arithmetic system, comprising:
a comparing and subtracting circuit operative to compare exponents of input operands representing floating-point numbers and to subtract from exponent of one of said input operands exponent of other of said input operands to determine a shift amount by which mantissa of said other input operand is to be shifted until said one and other input operands have equal exponents, said comparing and subtracting circuit being operative to generate a shift signal indicative of said determined shift amount;
a leading zero counter operative to count the number of leading zero in mantissa of said other input operand toward the most significant bit of the mantissa, said leading zero counter being operative to generate a leading zero count signal indicative of the counted number of leading zero; and
a comparator operative to compare said shift signal with said leading zero count signal, said comparator being operative to generate a sticky bit signal in response to the result of comparing said shift signal with said leading zero count signal, which sticky bit signal anticipates creation of a sticky bit after shifting the mantissa for alignment.

4. A floating-point arithmetic system with a sticky bit determination, comprising:
a comparing and subtracting circuit operative to compare exponents of input operands representing floating-point numbers to determine one of said input operands having the largest exponent, said comparing and subtracting circuit being operative to generate a comparison result signal indicative of the comparison result,
said comparing and subtracting circuit being operative to subtract from the largest exponent of said one input operand exponent of other of said input operands to determine a shift amount by which mantissa of said other input operand is to be shifted until said one and other input operands have equal exponents, said comparing and subtracting circuit being operative to generate a shift signal indicative of said determined shift amount;
a leading zero counter operative to count the number of leading zero in mantissa of said other input operand toward the most significant bit of the mantissa, said leading zero counter being operative to generate a leading zero count signal indicative of the counted number of leading zero;
a comparator operative to compare said shift signal with said leading zero count signal, said comparator being operative to generate a sticky bit signal in response to the result of comparing said shift signal with said leading zero count signal, which sticky bit signal anticipates creation of a sticky bit after shifting the mantissa for alignment;
a mantissa selecting circuit operative to select and provide mantissas of said input operands in response to said comparison result signal;
a shifting circuit operative in response to said shift signal to shift mantissa of said other input operand that is provided thereto by said mantissa selecting circuit so that said mantissas have equal exponents, said shifting circuit being operative to generate an output signal indicative of said shifted mantissa; and
an absolute value adding and subtracting circuit operative to perform addition or subtraction in response to said output signal and said sticky bit signal.

5. A method of determining a sticky bit in a floating point arithmetic system, comprising the steps of:
comparing exponents of input operands representing floating-point numbers;
subtracting from exponent of one of said input operands exponent of other of said input operands to determine a shift amount by which mantissa of said other input operand is to be shifted until said one and other input operands have equal exponents and generating a shift signal indicative of said determined shift amount;
counting the number of leading zero in mantissa of said other input operand toward the most significant bit of the mantissa and generating a leading zero count signal indicative of the number of leading zero; and
comparing said shift signal with said leading zero count signal and generating a sticky bit signal in response to the result of comparing said shift signal with said leading zero count signal, which sticky bit signal anticipates creation of a sticky bit after shifting the mantissa for alignment.
